# EUROPÄISCHE PATENTSCHRIFT

(11) **EP 2 225 825 B1**
(45) Veröffentlichungstag und Bekanntmachung des Hinweises auf die Patenterteilung: **01.07.2015**
(21) Anmeldenummer: 08854591.8
(22) Anmeldetag: 30.11.2008
(51) Int. Cl.: H02P 6/18

(54) **VERFAHREN UND SCHALTUNGSANORDNUNG ZUR ERZEUGUNG VON ROTOR-POSITIONSSIGNALEN UND ZUR SENSORLOSEN KOMMUTIERUNG BÜRSTENLOSER GLEICHSTROMMOTOREN**
METHOD AND CIRCUIT FOR THE COMMUTATION OF BRUSHLESS DIRECT-CURRENT MOTORS, WITHOUT USING SENSORS
PROCÉDÉ ET ENSEMBLE CIRCUIT POUR LA COMMUTATION SANS CAPTEUR DE MOTEURS À COURANT CONTINU SANS BALAI

(30) Priorität: 30.11.2007 DE 102007058057; 25.02.2008 DE 102008010845
(43) Veröffentlichungstag der Anmeldung: 08.09.2010
(73) Patentinhaber: Trinamic Motion Control GmbH & Co. KG, 22769 Hamburg (DE)
(72) Erfinder: LARSSON, Lars, 20249 Hamburg (DE); DWERSTEG, Bernhard, 25462 Rellingen (DE)
(74) Vertreter: Heun, Thomas
(86) Internationale Anmeldenummer: PCT/EP2008/010150
(87) Internationale Veröffentlichungsnummer: WO 2009/068314

(56) Entgegenhaltungen:
- EP-A- 0 663 718
- JP-A- 7 023 587
- US-A- 5 751 128

## Beschreibung

Die Erfindung betrifft ein Verfahren und eine Schaltungsanordnung zur sensorlosen Kommutierung bürstenloser Gleichstrommotoren (BLDC-Motoren) und insbesondere ein Verfahren und eine Schaltungsanordnung zur sensorlosen Erzeugung von Rotor-Positionssignalen zur Kommutierung bürstenloser Gleichstrommotoren.

Während bei bürstenbehafteten Gleichstrommotoren die Magnetspulen im Rotor und der mindestens eine Permanentmagnet im Stator angeordnet sind, zeichnen sich bürstenlose Gleichstrommotoren im Wesentlichen dadurch aus, dass die Magnetspulen im Stator liegen und der Rotor einen oder mehrere Permanentmagnete aufweist. Bei dieser Anordnung sind somit keine schleifenden Kontakte zur elektrischen Versorgung bzw. Kommutierung der Magnetspulen erforderlich, so dass auch die damit verbundenen Nachteile wie insbesondere das bekannte Bürstenfeuer, das erhebliche hochfrequente Störungen (EMI) verursachen kann, sowie ein Verschleiß der Bürsten und Kollektoren nicht auftreten können.

Bürstenlose Gleichstrommotoren haben somit eine wesentlich höhere Zuverlässigkeit und Lebensdauer, sowie ferner einen höheren Wirkungsgrad, ein geringeres Laufgeräusch und verursachen zudem auch keine Verschmutzung durch Abrieb oder Abbrennen der Kontaktbürsten. Diese Motoren sind sowohl als Innenläufer, als auch als Außenläufer realisierbar, wobei insbesondere Innenläufer noch den Vorteil der besseren Wärmeabfuhr aus den Magnetspulen im Vergleich zu bürstenbehafteten Gleichstrommotoren aufweisen.

Bürstenlose Gleichstrommotoren (BLDC- Motoren) werden schließlich als Dauerläufer in den verschiedensten Leistungsbereichen realisiert.

Zum Betreiben eines BLDC-Motors müssen die Magnetspulen zeitversetzt mit Strömen bestimmter Richtung jeweils so angesteuert werden, dass sich das im Stator aufgebaute Magnetfeld dreht und dabei den Rotor mitnimmt. Zu diesem Zweck, das heißt insbesondere zur zeitlich korrekten Kommutierung der Spulenströme, werden Informationen über die momentane Lage beziehungsweise Position des Rotors relativ zu den Magnetspulen benötigt.

Hierbei ist zu unterscheiden zwischen einer sensorgestützten und einer sensorlosen Rotor-Positionserfassung und der jeweils entsprechenden, damit vorgenommenen Kommutierung der Spulenströme bzw. der Steuerung des Motors.

Eine sensorgestützte Erfassung der Rotorposition kann zum Beispiel mit Hilfe von magnetischen Sensoren (zum Beispiel Hall-Effekt-Sensoren, Feldplatten), elektrischen Sensoren (zum Beispiel Potentiometern) oder optischen Sensoren (zum Beispiel mit Encodern oder Resolvern) erfolgen, während bei einer sensorlosen Detektion die von dem Rotor in einer gerade nicht angesteuerten Magnetspule gegeninduzierte Spannung (BEMF) erfasst und ausgewertet wird.

Beide Arten der Ermittlung der Rotorposition beinhalten Nachteile.

Während bei der sensorgestützten Erfassung die oben genannten Sensoren insbesondere auf Grund ihrer zusätzlichen Kosten sowie des erforderlichen Platzes als nachteilig angesehen werden, besteht bei der sensorlosen Detektion häufig das Problem, dass die erfasste gegeninduzierte Spannung mit induktiven Störpulsen überlagert ist, wenn nämlich zum Zeitpunkt des elektrischen Trennens der betreffenden Spule noch ein Strom durch diese Spule fließt. Die Höhe dieser Störpulse hängt im Wesentlichen von der mechanischen Last an der Motorwelle ab. Da diese Störpulse sehr große Amplituden und eine nicht mehr vernachlässigbare Dauer erreichen können, sind sie durch eine analoge Filterung im Allgemeinen nicht in ausreichendem Maße zu beseitigen, so dass sie auch den rekonstruierten Positionsoder Kommutierungssignalen noch überlagert sind und eine zuverlässige Kommutierung der Spulen nicht mehr unter allen Betriebsbedingungen des Motors gewährleisten.

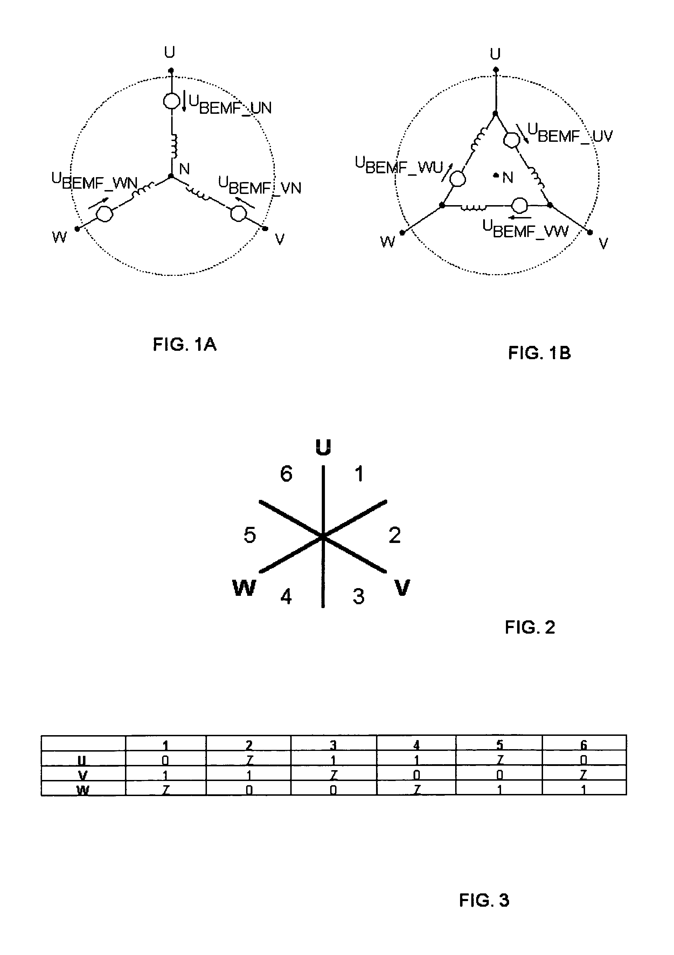

Bei Motoren, deren Spulen gemäß Figur 1A in Sternschaltung verbunden sind, besteht weiterhin das Problem, dass der zum Messen der durch den Rotor in jeweils einer der Spulen induzierten Spannung erforderliche Sternpunkt N üblicherweise nicht gesondert aus dem Motor herausgeführt ist, so dass er elektrisch rekonstruiert werden muss. Auch wenn es hierfür zahlreiche Vorschläge gibt, ist eine solche Rekonstruktion im Allgemeinen relativ aufwändig oder relativ ungenau, insbesondere wenn der Motor unter sehr unterschiedlichen Lastbedingungen betrieben werden soll.

Eine entsprechende Treiberschaltung für einen bürstenlosen Motor ist zum Beispiel auch aus der EP 0 663 718 bekannt, mit der ein zuverlässiger Start und eine stabile Drehbewegung des Motors unabhängig von einer Motorlast erzielt werden soll.

Eine allgemeine Aufgabe, die der Erfindung zu Grunde liegt, besteht deshalb darin, nach einer kostengünstigen, platzsparenden und zuverlässigen Möglichkeit zu suchen, mit der bürstenlose Gleichstrommotoren elektrisch kommutiert werden können.

Der Erfindung liegt insbesondere die Aufgabe zugrunde, ein Verfahren und eine Schaltungsanordnung zur sensorlosen Erzeugung von Rotor-Positionssignalen zur Kommutierung bürstenloser Gleichstrommotoren anzugeben, mit denen eine einfache, zuverlässige und insbesondere störungsfreie Kommutierung auch unter ungünstigen Lastbedingungen des Motors möglich ist.

Gelöst werden diese Aufgaben gemäß den unabhängigen Ansprüchen.

Ein besonderer Vorteil dieser Lösungen besteht daran, dass der zusätzliche Schaltungsaufwand relativ gering ist und kostengünstig zum Beispiel als Teil einer weitgehend integrierten Motor-Ansteuereinheit realisiert werden kann.

Die Unteransprüche haben vorteilhafte Weiterbildungen der Erfindung zum Inhalt. Weitere Einzelheiten, Merkmale und Vorteile ergeben sich aus der folgenden Beschreibung einer beispielhaften bevorzugten Ausführungsform anhand der Zeichnung. Es zeigt:
- Fig. 1: zwei übliche Wicklungsverschaltungen bei einem dreiphasigen Motor;
- Fig. 2: eine Darstellung von sechs Sektoren sowie drei Phasen eines solchen Motors zur Erläuterung der Kommutierung;
- Fig. 3: ein Kommutierungsmuster für sechs Sektoren;
- Fig. 4: eine Schaltungsanordnung zur sensorlosen Erzeugung von Kommutierungssignalen;
- Fig. 5: eine Darstellung verschiedener zeitlicher Spannungsverläufe in der Schaltungsanordnung gemäß Figur 4;
- Fig. 6: ein Schaltungsteil der Schaltungsanordnung gemäß Figur 4; und
- Fig. 7: eine weitere Darstellung von zeitlichen Spannungsverläufen in der Schaltungsanordnung gemäß Figur 4.

Am häufigsten werden bürstenlose Gleichstrommotoren mit drei Phasen U, V, W, das heißt drei Magnetspulen eingesetzt, wobei die Spulen entweder gemäß Figur 1A in Sternschaltung oder gemäß Figur 1B in Dreieckschaltung verbunden sind. Bei einer bekannten sensorlosen Kommutierung werden die durch die Bewegung des Rotors in den Magnetspulen des Stators induzierten Spannungen (das heißt U_BEMF_UN, U_BEMF_VN, U_BEMF_WN bei BLDC-Motoren in Sternschaltung bzw. U_BEMF_UV, U_BEMF_VW, U_BEMF_WU bei BLDC-Motoren in Dreieckschaltung) ausgewertet. Da jedoch bei handelsüblichen Motoren in Sternschaltung der Sternpunkt N meist nicht separat herausgeführt ist, muss dieser elektrisch rekonstruiert werden, was wie oben erwähnt verschiedene Nachteile beinhalten kann.

Figur 2 zeigt schematisch die drei um 120° versetzten Phasen U, V, W bzw. die äußeren Spulenanschlüsse eines solchen Motors, wobei im Falle einer sensorgestützten Positionserfassung des Rotors üblicherweise an jeder Phase bzw. Motorspule auch ein Hallsensor als Positionsgeber (nicht dargestellt) angeordnet ist.

Zur Blockkommutierung (das heißt es ist stets eine Spule mit einer positiven Versorgungsspannung verbunden, eine Spule ist mit Masse oder mit einer negativen Versorgungsspannung verbunden, und eine Spule ist von der Versorgungsspannung getrennt oder offen) wird die elektrische 360° Periode gemäß Figur 2 in sechs gleichgroße Sektoren (1, 2, 3, 4, 5, 6) von jeweils 60° eingeteilt.

Unter der Annahme, dass drei im Winkel von 120° angeordnete Hallsensoren verwendet werden, bilden diese zusammen einen Bitvektor, der jeder Rotorposition einen der sechs Sektoren 1 bis 6 eindeutig zuordnet. Der Null-Vektor und der Eins-Vektor kommen dabei nicht vor. Während der Rotation des Rotors liefern die Hallsensoren eine einschrittige Bit-Vektor-Folge. Jedem Bit-Vektor wird dann ein Bestromungsmuster für die Magnetspulen zugeordnet.

Mit anderen Worten wird zur Kommutierung der Spulen jedem Sektor 1 bis 6 eine Magnetfeldkonfiguration zugeordnet, die durch eine individuelle Bestromung der Spulen definiert wird, die ihrerseits durch an die Anschlüsse U, V, W des Motors angelegte Effektivspannungen bestimmt wird. Diese Effektivspannungen werden üblicherweise durch Pulsweitenmodulation (PWM) der Versorgungsspannung erzeugt.

Soll zum Beispiel eine Drehung des Rotors in der Reihenfolge der Sektoren 1, 2, 3, 4, 5, 6, 1, 2, 3, 4, 5, 6, ... erfolgen, so wird jeder Rotorposition R = {1, 2, 3, 4, 5, 6} die Nachfolgeposition ((R+1) mod 6) zugeordnet [mod = modulo]. Befindet sich der Rotor beispielsweise im Sektor 2, so liegt das Spannungsschema UVW = Z10 an, und es wird auf das Spannungsschema UVW = 1Z0 des Sektors 3 (= (2+1) mod 6)) geschaltet, das heißt kommutiert. Dabei bedeutet "0", dass der betreffende Spulenanschluss mit Masse verbunden ist, "1" bedeutet, dass der betreffende Spulenanschluss mit der Versorgungsspannung verbunden ist, und "Z" bedeutet, dass der betreffende Spulenanschluss offen ist. Dieses Kommutierungsmuster ist in Figur 3 in Form einer Tabelle der Spannungsschema UVW für alle sechs Sektoren 1 bis 6 dargestellt.

Anstatt die Versorgungsspannung direkt an die Spulenanschlüsse U, V, W des Motors zu schalten, kann die Versorgungsspannung auch mit einer Pulsweitenmodulation (PWM) überlagert werden, um eine geringere Effektivspannung als die Versorgungsspannung einstellen zu können. Über die Einstellung des PWM-Tastverhältnisses lässt sich dann die Drehgeschwindigkeit des Rotors steuern bzw. regeln.

Beim Öffnen einer Spule, das heißt beim Umschalten von 0 nach Z oder von 1 nach Z an einem der Anschlüsse U, V, W des Motors, entstehen, wie oben erwähnt wurde, induktive Spannungsspitzen U = -L * dl/dt, wenn zum Zeitpunkt des elektrischen Trennens (Übergang in den offenen Zustand (Z)) noch ein Strom durch den betreffenden Anschluss des Motors, das heißt durch die betreffende Spule fließt. Die Höhe dieses zum Zeitpunkt des Trennens fließenden Stroms ist im wesentlichen von der mechanischen Last an der Motorwelle abhängig. Die induktiven Spannungsspitzen stören die rekonstruierten Hallsignale und lassen sich auch nicht durch einfache Filter unterdrücken, da sie eine sehr große Amplitude und eine nicht vernachlässigbare zeitliche Dauer aufweisen können.

Mit dem erfindungsgemäßen Verfahren bzw. der erfindungsgemäßen Schaltungsanordnung kann der Einfluss dieser Spannungsspitzen bzw. Störimpulse jedoch in einfacher und wirkungsvoller Weise unterdrückt oder beseitigt werden.

Der Vollständigkeit halber sei erwähnt, dass zwar auch Motoren mit im Winkel von 60° angeordneten Hallsensoren bekannt sind. Für solche Motoren sind die Verhältnisse anders als oben geschildert (das heißt unterschiedliche Abfolge der Hallsensor-Signale). Beim überwiegenden Teil der BLDC-Motoren sind die Hallsensoren jedoch im Winkel von 120° angeordnet. Mit dem hier beschriebenen Verfahren bzw. der Schaltungsanordnung werden Rotor-Positionssignale erzeugt, die Positionssignalen von mit im Winkel von 120° angeordneten Hallsensoren entsprechen, wobei davon ausgegangen sei, dass die Hallsensoren so angeordnet sind, dass die Nulldurchgänge der in den betreffenden Spulen gegeninduzierten Spannungen jeweils mit den Nulldurchgängen des Hallsensor-Signals möglichst nahe zusammenfallen - die Nulldurchgänge sollen im Idealfall identisch sein.

Mit dem erfindungsgemäßen Verfahren und der erfindungsgemäßen Schaltungsanordnung werden also sensorlos Rotor-Positionssignale erzeugt, die denjenigen von mit Hallsensoren erzeugten Signalen entsprechen, ohne dass jedoch die mit der Verwendung von Hallsensoren (oder anderen Sensoren) verbundenen Nachteile oder die oben genannten induktiven Störsignale im Falle einer sensorlosen Kommutierung in Kauf genommen werden müssen, und wobei auch ein Sternpunkt N (siehe oben) nicht rekonstruiert werden muss.

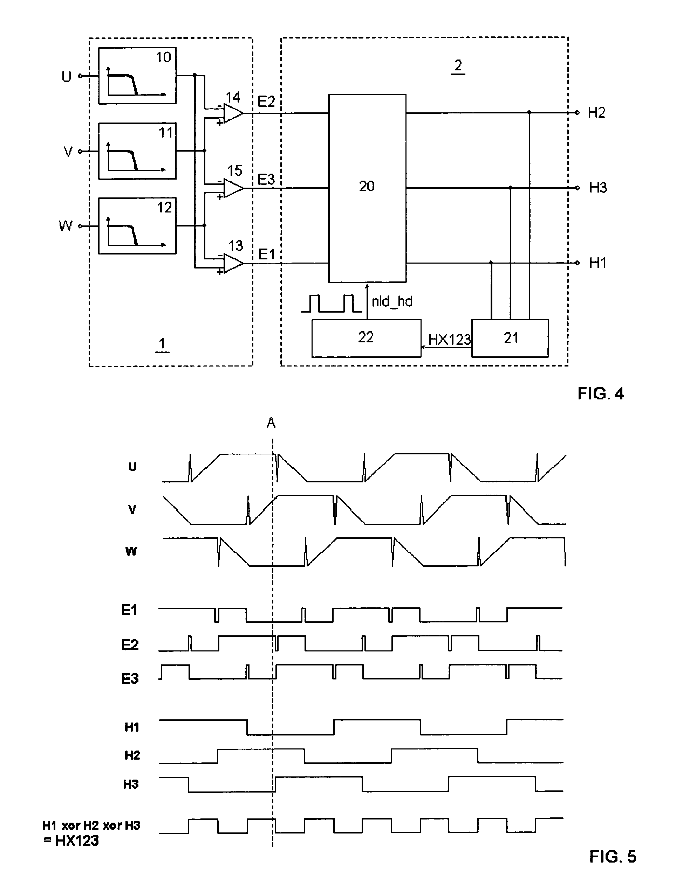

Figur 4 zeigt schematisch ein Blockschaltbild einer erfindungsgemäßen Schaltungsanordnung. Die Schaltungsanordnung umfasst als wesentliche Komponenten eine erste Einrichtung 1 zur Erzeugung von emulierten Hallsensor-Signalen, sowie eine zweite Einrichtung 2 zur Unterdrückung von Störimpulsen in den emulierten Hallsensor-Signalen.

Die erste Einrichtung 1 umfasst einen ersten, einen zweiten und einen dritten Tiefpass-Filter 10, 11, 12, die jeweils mit ihrem Eingang an eine der drei Phasen bzw. äußeren Spulenanschlüsse U, V, W des Motors angeschlossen sind. (Gegebenenfalls sind vor die Eingänge der Tiefpass-Filter Spannungsteiler zu schalten, sofern der Common Mode Bereich der Filter dies erfordert.) Es werden vorzugsweise entweder Tiefpass-Filter zweiter Ordnung verwendet, deren Filtercharakteristik in Abhängigkeit von der Drehzahl des Motors (zum Beispiel über das oben genannte PWM-Tastverhältnis) einstellbar bzw. an die Drehzahl anpassbar ist (zum Beispiel mittels SCF - Switched Capacitor Filter), um einen möglichst geringen Phasenfehler zur realisieren. Alternativ dazu könnten zum gleichen Zweck auch Filter höherer oder sehr hoher Ordnung eingesetzt werden.

Figur 5 zeigt die an den Anschlüssen U, V, W anliegenden Spannungsverläufe, die durch den sich drehenden Rotor in der mit dem jeweiligen Anschluss verbundenen Spule hervorgerufen werden, einschließlich der beim Übergang in den offenen Spulenzustand (das heißt von 0 nach Z oder von 1 nach Z) jeweils auftretenden Störimpulse. Zum Betrieb des Motors gemäß der Erfindung ist also eine allerdings nur sehr geringe Mindestdrehzahl erforderlich.

Der Grund dafür, dass diese Spannungen trapezförmig und nicht sinusförmig verlaufen, liegt an der im Beispiel verwendeten Ansteuerung des Motors mit Blockkommutierung.

Die erste Einrichtung 1 umfasst weiterhin einen ersten, einen zweiten und einen dritten digitalen Komparator 13, 14, 15, mit denen aus den Ausgangssignalen der drei Tiefpass-Filter 10, 11, 12 jeweils Differenzsignale gebildet werden. Zu diesem Zweck ist gemäß Figur 4 der Ausgang des ersten Tiefpass-Filters 10 mit dem Plus-Eingang des ersten und dem Minus-Eingang des zweiten Komparators 13, 14, der Ausgang des zweiten Tiefpass-Filters 11 mit dem Plus-Eingang des zweiten und dem Minus-Eingang des dritten Komparators 14, 15 und der Ausgang des dritten Tiefpass-Filters 12 mit dem Minus-Eingang des ersten und dem Plus-Eingang des dritten Komparators 13, 15 verbunden.

Die an dem Ausgang des ersten, des zweiten und des dritten Komparators 13, 14, 15 anliegenden Spannungsverläufe E1, E2 bzw. E3 sind ebenfalls in Figur 5 dargestellt. Dabei ist E1 die Differenz der Tiefpass-gefilterten Spannungen U - W, E2 die Differenz der Tiefpass-gefilterten Spannungen V - U, und E3 die Differenz der Tiefpass-gefilterten Spannungen W - V.

Es handelt sich bei E1, E2, E3 bereits um emulierte Hallsensor-Signale, für deren Erzeugung somit kein elektrisch rekonstruierter oder virtueller Sternpunkt N erforderlich ist, denen jedoch noch die in den Spannungsverläufen U, V, W vorhandenen Störimpulse überlagert sind, die auch in Figur 5 gezeigt sind.

Zur Beseitigung dieser Störimpulse dient die zweite Einrichtung (Störimpulsunterdrückung) 2, die als wesentliche Komponenten ein Halteregister 20, eine logische XOR-Verknüpfung (Exklusiv-ODER) 21 und ein Vor- und Rückflanken-getriggertes Monoflop 22 aufweist.

Das Halteregister 20 weist drei Eingänge auf, denen jeweils die Ausgangssignale E1, E2, E3 der drei Komparatoren 13, 14, 15 zugeführt werden, sowie drei Ausgänge, die jeweils mit einem ersten, einem zweiten bzw. einem dritten Ausgang H1, H2, H3 der Störimpulsunterdrückung 2 verbunden sind und an denen die von den Störimpulsen befreiten emulierten Hallsensor-Signale, deren Verläufe H1, H2, H3 auch in Figur 5 dargestellt sind (Rotor-Positionssignale), anliegen.

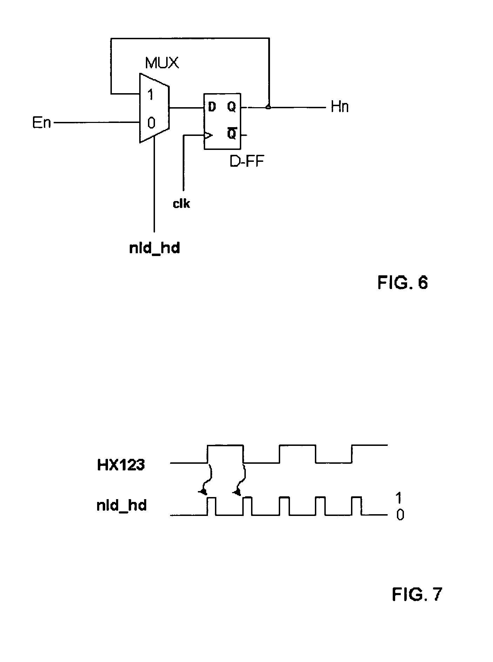

Das Halteregister 20 weist drei parallel arbeitende Halteregisterschaltungen auf, von denen eine schematisch in Figur 6 dargestellt ist. Eine solche Schaltung ist für jedes der drei Eingangssignale des Halteregisters 20 (das heißt für die Ausgangsignale En der Komparatoren 13, 14, 15) vorgesehen. Die drei Halteregisterschaltungen beinhalten jeweils ein D-Flipflop D-FF mit Multiplexer MUX. Dabei liegt an einem 0-Eingang des Multiplexers MUX eines der Ausgangsignale En (n = 1, 2, 3) der Komparatoren 13, 14 oder 15 an, während der 1-Eingang mit dem Ausgang Q des D-Flipflops D-FF verbunden ist, der auch an dem entsprechenden Ausgang Hn (n = 1, 2, 3) des Halteregisters 20 anliegt. Der Ausgang des Multiplexers MUX liegt an dem D-Eingang des D-Flipflops D-FF an. Der Multiplexer MUX sämtlicher drei Halteregisterschaltungen wird durch das Ausgangssignal nld_hd des Monoflops 22 geschaltet, während an den Takteingang des D-Flipflops D-FF der drei Halteregisterschaltungen ein Abtasttakt clk angelegt wird.

Zur Ansteuerung dieser Halteregisterschaltungen werden die Ausgangssignale Hn des Halteregisters 20 zunächst mittels der logischen XOR-Verknüpfung 21 einer logischen EXKLUSIV-ODER-Verknüpfung H1 xor H2 xor H3 (= HX123) unterworfen. Das Ausgangssignal HX123 der XOR-Verknüpfung 21, dessen Verlauf ebenfalls in Figur 5 dargestellt ist, wird dem Monoflop 22 zu dessen Triggerung zugeführt. Für die Dauer des getriggerten Zustandes des Monoflops 22 (und damit des 1-Zustandes des dem Halteregister 20 zugeführten Ausgangssignals nld_hd des Monoflops 22) hält das Halteregister 20 die drei momentanen, an seinen Ausgängen jeweils anliegenden 1- oder O-Zustände der Ausgangssignale H1, H2 bzw. H3, so dass also während dieser Zeitdauer auftretende Störimpulse, die den am Eingang des Halteregisters 20 anliegenden Eingangssignalen E1, E2, E3 überlagert sind, keine Änderung bzw. keinen Einfluss auf die Ausgangssignale H1, H2, H3 ausüben können und auf diese Weise beseitigt werden.

Anhand der in Figur 5 gestrichelt eingezeichneten Hilfslinie A lassen sich beispielhaft für einen bestimmten Zeitpunkt die zeitlichen Zusammenhänge zwischen den momentanen Spannungen an den Spulenanschlüssen U, V, W, einschließlich eines Störimpulses am Spulenanschluss U, sowie diejenigen der Ausgangssignale E1, E2, E3 der drei Komparatoren 13, 14, 15, der Ausgangssignale H1, H2, H3 des Halteregisters 20 und der XOR-Verknüpfung 21 (HX123) verfolgen.

Im Einzelnen schaltet gemäß Figur 7 jeder Flankenwechsel des Ausgangssignals HX123 der XOR-Verknüpfung 21 das Ausgangssignal (Blanking-Signal) des Monoflops 22 für eine bestimmte Zeitdauer auf "1" (nld_hd = 1) und damit die drei parallel arbeitenden Halteregisterschaltungen (Figur 6) für diese Zeitdauer (Blank Time) auf "Halten" ("hold"), und zwar solange, bis mögliche Störungen oder Störimpulse durch Induktionsspitzen, die den Eingangssignalen E1, E2 und E3 überlagert sind, vorüber sind.

Während der Haltephase (hold) hält das Halteregister 20 somit den Zustand seiner Ausgangssignale H1, H2, H3, über welche die Kommutierung der Motorspulen gesteuert wird, fest und beseitigt somit die Störimpulse, so dass also während dieser Haltephase auch keine unerwünschte Kommutierung durch Störimpulse verursacht werden kann, die ihrerseits wieder zu weiteren Störimpulsen und damit zu einem Aufschaukeln führen würde.

Während der Phase "Laden" ("load"), das heißt das Blanking-Signal nld_hd = 0, werden mit jeder Taktperiode clk (Abtasttakt) die Eingänge E1, E2, E3 des Halteregisters 20 jeweils an dessen Ausgänge H1, H2 bzw. H3 durchgeschaltet. Der Abtasttakt ist dabei zum Beispiel gleich dem Takt, mit dem die Filtercharakteristik der Tiefpass-Filter 10, 11, 12 geschaltet wird (SCF-Takt).

Durch geeignete Wahl des Abtasttaktes clk ist eine einfach parametrierbare Unterdrückung der induktiven Störimpulse möglich, die bei Block-Kommutierung durch Trennen einer noch bestromten Spule (Übergänge 0-Z und 1-Z, siehe oben) erzeugt werden.

Funktional kann die Erzeugung des Blanking-Signals nld_hd gemäß Figur 7 durch ein Monoflop 22 erfolgen, das mit jeder Flanke (das heißt mit der Vorderflanke und mit der Rückflanke) getriggert wird. Ein solches Monoflop kann aus einem üblichen einflankengetriggerten Monoflop aufgebaut werden, indem das Taktsignal zeitverzögert mit dem unverzögerten Taktsignal logisch EXKLUSIV ODER verknüpft und dieses so erzeugte Signal dann als Taktsignal für das einflankengetriggerte Monoflop verwendet wird. Die Zeitverzögerung (und damit die Zeitdauer des Zustandes nld_hd = 1) wird durch die zu erwartende Dauer der Störimpulse bestimmt bzw. festgelegt. Mit jedem Flankenwechsel des Signals HX123 wird dann ein kurzer Impuls mit dieser Zeitdauer erzeugt, der eine Vorderflanke und eine Rückflanke aufweist (Figur 7). Auf diese Weise kann dann jeder Flankenwechsel des Signals HX123 ein einflankengetriggertes Monoflop 22 triggern.

Mit dem erfindungsgemäßen Verfahren und der erfindungsgemäßen Schaltungsanordnung ist es somit möglich, Störimpuls-freie Rotor-Positionssignale mit korrekter Phasenlage zu erzeugen, die Hallsensor-Signalen entsprechen, ohne dass eine frequenzabhängige Verzögerung der Signale erforderlich ist. Es tritt keine wesentliche Phasenverschiebung auf (die bei vielen anderen Verfahren etwa 30° betragen kann), die aufwändig ausgeglichen werden müsste.

Die sensorlose Kommutierung gemäß der Erfindung arbeitet auch noch bei sehr geringer Drehgeschwindigkeit des Motors. Eine genaue Kenntnis elektrischer Motorparameter ist für die Realisierung der Erfindung (im Gegensatz zu der eingangs genannten analogen heraus-Filterung der Störsignale) nicht erforderlich.

Schließlich kann die Kommutierung des Motors mit Hilfe der gemäß der Erfindung erzeugten Kommutierungssignale H1, H2, H3 in gleicher Weise durchgeführt werden, wie mit Signalen, die mit Hallsensoren erzeugt werden, da auch erfindungsgemäß wie in Figur 2 dargestellt sechs Kommutierungspositionen vorhanden sind.

Es sei noch darauf hingewiesen, dass mit dem erfindungsgemäßen Prinzip auch Störimpulse anderer Art beseitigt werden können, die den emulierten Hallsensor-Signalen nach einem Flankenwechsel überlagert sind, sofern die Zeitdauer des von dem Monoflop erzeugten Impulses (blank time, Zustandes nld_hd = 1) entsprechend der Zeitdauer und dem zeitlichen Abstand dieser Störimpulse von dem Flankenwechsel eingestellt wird.

Das erfindungsgemäße Verfahren zur sensorlosen Erzeugung von Rotor-Positionssignalen kann vorzugsweise als Teil eines Verfahren zur sensorlosen Kommutierung bürstenloser Gleichstrommotoren oder als Teil eines Verfahrens zur Ansteuerung oder zum Betrieb bürstenloser Gleichstrommotoren ausgeführt werden.

Entsprechend kann eine erfindungsgemäße Schaltungsanordnung zur sensorlosen Erzeugung von Rotor-Positionssignalen als Bestandteil einer Schaltungsanordnung zur sensorlosen Kommutierung bürstenloser Gleichstrommotoren oder als Bestandteil einer Ansteuerschaltung zur Ansteuerung oder zum Betrieb bürstenloser Gleichstrommotoren ausgebildet sein. Vorzugsweise werden solche Schaltungsanordnungen weitgehend integriert auf einer Schaltungsplatine realisiert.

Diese Verfahren und Schaltungsanordnungen werden bevorzugt für sogenannte Kleinmotoren mit Leistungen bis zu einigen 100 Watt angewendet. Die typische Länge bzw. Dauer der oben beschriebenen, durch das Trennen der Magnetspulen hervorgerufenen Störimpluse (und damit das erforderliche Halten oder "Einfrieren" der emulierten Hallsensor-Signale) liegt dabei im Allgemeinen in einem Bereich zwischen einigen 100 µs und einigen 10 ms, während deren Amplituden den Bereich der Höhe der Motor-Versorgungsspannung erreichen können. Der Vollständigkeit halber sei erwähnt, dass das Halten bzw. Einfrieren prinzipiell unendlich kurz nach der Detektion einer Flanke eines Hallsignals bzw. dessen Wechsels erfolgen kann. Entscheidend ist nur, dass nach einem solchen Wechsel die emulierten Hallsignale für die oben genannte Zeitdauer gehalten bzw. eingefroren werden, so dass die Störimpulse den Ausgangssignalen nicht mehr überlagert sind.

## Patentansprüche

1. Verfahren zur sensorlosen Erzeugung von Rotor-Positionssignalen zur Kommutierung bürstenloser Gleichstrommotoren, mit folgenden Schritten:
- Erzeugen von emulierten Hallsensor-Signalen (E1, E2, E3) durch Differenzbildung von an nicht bestromten Spulenanschlüssen (U, V, W) des Motors anliegenden Spannungen, die durch einen Rotor in den Spulen gegeninduziert werden; und
- Erzeugen der Rotor-Positionssignale (H1, H2, H3) durch Halten der emulierten Hallsensor-Signale (E1, E2, E3) für eine Zeitdauer nach dem Auftreten eines Flankenwechsels dieser Signale, die mindestens der Zeitdauer oder dem zeitlichen Abstand von den emulierten Hallsensor-Signalen (E1, E2, E3) überlagerten Störimpulsen entspricht, **dadurch gekennzeichnet, dass**
- die an den Spulenanschlüssen anliegenden Spannungen (U, V, W) vor ihrer Differenzbildung jeweils einer Tiefpass-Filterung unterworfen werden, wobei zur Realisierung eines möglichst geringen Phasenfehlers entweder
- die Tiefpass-Filtercharakteristik in Abhängigkeit von einer Drehzahl des Motors eingestellt wird, oder
- Tiefpass-Filter hoher oder sehr hoher Ordnung eingesetzt werden.

2. Verfahren zur sensorlosen Kommutierung bürstenloser Gleichstrommotoren unter Anwendung eines Verfahrens gemäß Anspruch 1.

3. Schaltungsanordnung zur sensorlosen Erzeugung von Rotor-Positionssignalen zur Kommutierung bürstenloser Gleichstrommotoren, mit einer ersten Einrichtung (1) zur Erzeugung von emulierten Hallsensor-Signalen durch Differenzbildung von an nicht bestromten Spulenanschlüssen (U, V, W) des Gleichstrommotors anliegenden Spannungen, die durch einen Rotor in den Spulen gegeninduziert werden, sowie einer zweiten Einrichtung (2) zur Unterdrückung von Störimpulsen in den emulierten Hallsensor-Signalen, insbesondere nach einem Verfahren gemäß einem der Ansprüche 1 und 2, **dadurch gekennzeichnet, dass** die erste Einrichtung (1) einen ersten, einen zweiten und einen dritten Tiefpass-Filter (10, 11, 12) aufweist, denen jeweils eine der an den Spulenanschlüssen (U, V, W) des Gleichstrommotors anliegenden Spannungen zur Tiefpass-Filterung zugeführt wird, wobei zur Realisierung eines möglichst geringen Phasenfehlers entweder die Tiefpass-Filtercharakteristik in Abhängigkeit von einer Drehzahl des Motors einstellbar ist, oder die Tiefpass-Filter von hoher oder sehr hoher Ordnung sind.

4. Schaltungsanordnung nach Anspruch 3,
bei der die erste Einrichtung (1) eine erste, eine zweite und eine dritte Einheit (13, 14, 15) aufweist, mit denen jeweils die Differenzen zwischen zwei der an den Spulenanschlüssen des Gleichstrommotors anliegenden Spannungen (U, V, W) gebildet werden.

5. Schaltungsanordnung nach Anspruch 3,
bei der die erste, die zweite und die dritte Einheit jeweils durch einen ersten, einen zweiten bzw. einen dritten digitalen Komparator (13, 14, 15) zur Differenzbildung der Spannungen gebildet ist.

6. Schaltungsanordnung nach Anspruch 3,
bei der die zweite Einrichtung (2) ein Halteregister (20), dem die emulierten Hallsensor-Signale (E1, E2, E3) zugeführt werden, eine Einheit (21) zur logischen XOR-Verknüpfung der am Ausgang des Halteregisters (20) anliegenden Signale (H1, H2, H3), sowie ein Vor- und Rückflanken-getriggertes Monoflop (22) aufweist, dem die Ausgangssignale der Einheit (21) zugeführt werden, zum Schalten des Halteregisters (20) in der Weise, dass es die an seinem Ausgang anliegenden Signale (H1, H2, H3) für eine vorbestimmte Zeitdauer nach einem Flankenwechsel dieser Signale hält.

7. Schaltungsanordnung nach Anspruch 6,
bei der das Monoflop (22) so dimensioniert ist, dass die vorbestimmte Zeitdauer mindestens der zu erwartenden Dauer oder des zu erwartenden Abstandes der Störimpulse, die durch ein Trennen der Motorspulen von der Versorgungsspannung induziert werden, von dem Flankenwechsel entspricht.

8. Schaltungsanordnung nach Anspruch 6,
bei der das Monoflop (22) aus einem einflankengetriggerten Monoflop gebildet ist, bei dem ein Taktsignal zeitverzögert mit dem unverzögerten Taktsignal logisch EXKLUSIV ODER verknüpft wird.

9. Schaltungsanordnung zur sensorlosen Kommutierung bürstenloser Gleichstrommotoren, mit einer Schaltungsanordnung gemäß einem der Ansprüche 3 bis 8.

10. Ansteuerschaltung zur Ansteuerung oder zum Betrieb bürstenloser Gleichstrommotoren, mit einer Schaltungsanordnung gemäß einem der Ansprüche 3 bis 9.

## Claims

1. Method for generating without using sensors rotor position signals for the commutation of brushless direct-current motors, comprising the following steps:
- generating emulated Hall sensor signals (E1, E2,E3) by subtraction of voltages appearing at motor coil terminals (U, V, W) which are not fed with current, which voltages are mutually induced by the rotor into the coils; and
- generating the rotor position signals (H1, H2, H3) by holding the emulated Hall sensor signals (E1, E2, E3) for a duration of time after the occurrence of an edge change of these signals, which corresponds at least to the duration of time or the temporal distance of disturbing pulses which overlay the emulated Hall sensor signals (E1, E2, E3), **characterized in that**
- the voltages (U, V, W) appearing at the coil terminals are each subjected to a low-pass-filtering before their subtraction, wherein in order to obtain an as low as possible phase error either
- the low-pass filter characteristic is adjusted in dependence on the speed of the motor, or
- low-pass filters of high or very high order are used.

2. Method for the commutation of brushless direct-current motors without using sensors, using a method according to claim 1.

3. Circuit arrangement for generating without using sensors rotor position signals for the commutation of brushless direct-current motors, comprising a first device (1) for generating emulated Hall sensor signals by subtraction of voltages appearing at motor coil terminals (U, V, W) which are not fed with current, which voltages are mutually induced by the rotor into the coils, and a second device (2) for suppressing disturbing pulses in the emulated Hall sensor signals, in particular according to a method according to one of claims 1 and 2, **characterized in that** the first device (1) comprises a first, a second and a third low-pass filter (10, 11, 12) to which each one of the voltages appearing at the coil terminals (U, V, W) of the direct-current motor is fed for low-pass filtering, wherein in order to obtain an as low as possible phase error either the low-pass filter characteristic is adjustable in dependence on the speed of the motor, or the low-pass filters are of high or very high order.

4. Circuit arrangement according to claim 3,
in which the first device (1) has a first, a second and a third unit (13, 14, 15) with which the differences between each two of the voltages (U, V, W) appearing at the coil terminals of the direct-current motor are generated.

5. Circuit arrangement according to claim 3,
in which the first, the second and the third unit is provided by a first, a second and a third digital comparator (13, 14, 15), respectively, for subtraction of the voltages.

6. Circuit arrangement according to claim 3,
in which the second device (2) comprises a holding register (20), to which the emulated Hall sensor signals (E1, E2, E34) are fed, a unit (21) for logical XOR combination of the signals (H1, H2, H3) appearing at the output of the holding register (2), and a monostable flip-flop (22) triggered by a rising-edge and a falling-edge, to which the output signals of the unit (21) are fed, for switching the holding register (20) such that it holds the signals (H1, H2, H3) appearing at its output for a predetermined temporal duration after an edge change of these signals.

7. Circuit arrangement according to claim 6,
in which the monostable flip-flop (22) is dimensioned such that the predetermined temporal duration corresponds at least to the expected duration of the disturbing pulses or the expected distance of the disturbing pulses from the edge change, wherein the disturbing pulses are induced by a separation of the motor coils from the power supply.

8. Circuit arrangement according to claim 6,
in which the monostable flip-flop (22) is provided by a single-edge-triggered monostable flip-flop in which the clock signal is time-delayed logically EXCLUSIVE OR-combined with the non-delayed clock signal.

9. Circuit arrangement for the commutation of brushless direct-current motors without sensors, comprising a circuit arrangement according to one of claims 3 to 8.

10. Driving circuit for driving or operating brushless direct-current motors, comprising a circuit arrangement according to one of claims 3 to 9.

## Revendications

1. Procédé pour la production sans capteur de signaux de position du rotor pour la commutation de moteurs à courant continu sans balais, comprenant les étapes suivantes:
- production de signaux de capteurs Hall émulés (E1, E2, E3) par formation de différences des contre-tensions présentes à des bornes d'enroulements sans courant (U, V, W) du moteur, qui sont induites dans les enroulements par un rotor; et
- production des signaux de position du rotor (H1, H2, H3) par maintien des signaux de capteurs Hall émulés (E1, E2, E3) pendant un intervalle de temps après la survenance d'un changement de flanc de ces signaux, qui correspond au moins à la durée ou à l'écart de temps d'impulsions parasites superposées aux signaux de capteurs Hall émulés (E1, E2, E3),
**caractérisé en ce que**
- les tensions présentes aux bornes des enroulements (U, V, W) avant la formation de leurs différences sont soumises à un filtrage passe-bas, dans lequel, pour la réalisation d'un déphasage aussi faible que possible
- soit la caractéristique du filtre passe-bas est réglée en fonction de la vitesse de rotation du moteur,
- soit on utilise des filtres passe-bas d'ordre élevé ou très élevé.

2. Procédé pour la commutation sans capteur de moteurs à courant continu sans balais par application d'un procédé selon la revendication 1.

3. Ensemble de circuit pour la production sans capteur de signaux de position du rotor pour la commutation de moteurs à courant continu sans balais, avec un premier dispositif (1) pour la production de signaux de capteurs Hall émulés par formation de différences des contre-tensions présentes à des bornes d'enroulements sans courant (U, V, W) du moteur à courant continu, qui sont induites dans les enroulements par un rotor, ainsi qu'avec un deuxième dispositif (2) pour la suppression d'impulsions parasites dans les signaux de capteurs Hall émulés, en particulier suivant un procédé selon l'une quelconque des revendications 1 et 2, **caractérisé en ce que** le premier dispositif (1) présente un premier, un deuxième et un troisième filtres passe-bas (10, 11, 12), auxquels une des tensions présentes aux bornes des enroulements (U, V, W) du moteur à courant continu est respectivement fournie pour filtrage passe-bas, dans lequel, pour réaliser un déphasage aussi faible que possible, soit la caractéristique des filtres passe-bas est réglable en fonction de la vitesse de rotation du moteur, soit les filtres passe-bas sont d'un ordre élevé ou très élevé.

4. Ensemble de circuit selon la revendication 3,
dans lequel le premier dispositif (1) présente une première, une deuxième et une troisième unités (13, 14, 15), avec lesquelles on forme respectivement les différences entre deux des tensions (U, V, W) présentes aux bornes des enroulements du moteur à courant continu.

5. Ensemble de circuit selon la revendication 3,
dans lequel la première, la deuxième et la troisième unités sont formées respectivement par un premier, un deuxième ou un troisième comparateur numérique (13, 14, 15) pour la formation des différences des tensions.

6. Ensemble de circuit selon la revendication 3,
dans lequel le deuxième dispositif (2) présente un registre de maintien (20), auquel les signaux de capteurs Hall émulés (E1, E2, E3) sont fournis, une unité (21) pour la liaison logique OU exclusif des signaux (H1, H2, H3) présents à la sortie du registre de maintien (20), ainsi qu'une bascule monostable (22) déclenchée par le flanc avant et arrière, à laquelle les signaux de sortie de l'unité (21) sont fournis, pour la commutation du registre de maintien (20), de telle manière qu'il maintienne les signaux (H1, H2, H3) présents à sa sortie pendant un intervalle de temps prédéterminé après un changement de flanc de ces signaux.

7. Ensemble de circuit selon la revendication 6,
dans lequel la bascule monostable (22) est dimensionnée de telle manière que l'intervalle de temps prédéterminé corresponde au moins à la durée probable ou à l'écart de temps probable des impulsions parasites, qui sont induites par une séparation des enroulements du moteur de la tension d'alimentation, à partir du changement de flanc.

8. Ensemble de circuit selon la revendication 6,
dans lequel la bascule monostable (22) est formée par une bascule monostable à déclenchement par un seul flanc, dans laquelle un signal d'horloge est lié par une liaison logique OU exclusif avec un retard de temps au signal d'horloge non retardé.

9. Ensemble de circuit pour la commutation sans capteur de moteurs à courant continu sans balais, avec un ensemble de circuit selon l'une quelconque des revendications 3 à 8.

10. Circuit de commande pour la commande ou la conduite de moteurs à courant continu sans balais, avec un ensemble de circuit selon l'une quelconque des revendications 3 à 9.
